# EUROPEAN PATENT APPLICATION

(11) **EP 4 806 264 A1**
(43) Date of publication of application: **16.09.2026**
(21) Application number: 24888625.1
(22) Date of filing: 31.10.2024
(51) Int. Cl.: A01N 25/28, A01N 25/04, C08G 18/00, C08G 18/08, C09D 5/14, C09D 175/04

(54) **POLYURETHANE DISPERSION AND COATING MATERIAL**

(30) Priority: 08.11.2023 JP 2023190596
(71) Applicant: Mitsui Chemicals, Inc., Tokyo 104-0028 (JP)
(72) Inventor: YAMASHITA, Tatsuya, Sodegaura-shi, Chiba 299-0265 (JP); FUKUDA, Kazuyuki, Sodegaura-shi, Chiba 299-0265 (JP); KIMURA, Natsumi, Sodegaura-shi, Chiba 299-0265 (JP); SATO, Haruka, Sodegaura-shi, Chiba 299-0265 (JP); YOSHIMURA, Masafumi, Sodegaura-shi, Chiba 299-0265 (JP)
(74) Representative: Hoffmann Eitle
(86) International application number: PCT/JP2024/038831
(87) International publication number: WO 2025/100328

(57) **Abstract**

A polyurethane dispersion contains water, a polyurethane resin dispersed in the water, and a water-insoluble compound encapsulated in the polyurethane resin. The non-water-soluble compound has an activity against a minute hazardous substance. The polyurethane resin contains an anionic group, and the polyurethane resin has an acid value of 8 to 25 mgKOH/g, and/or the polyurethane resin contains a polyoxyethylene group, and the polyurethane resin has an oxyethylene content rate of 8 to 20% by mass.

## Description

### TECHNICAL FIELD

The present invention relates to a polyurethane dispersion and a coating material.

### BACKGROUND ART

Conventionally, a lipophilic active component is contained in resin particles in an aqueous dispersion. Further, such an aqueous dispersion is used as a coating material.

More specifically, the following nanocapsules and a suspension containing the nanocapsules have been proposed. That is, the nanocapsules each include a central portion and an outer covering. The central portion contains a lipophilic active component. The outer covering is a water-insoluble, polymerized outer covering. The polymerized outer covering contains a water-dispersible anionic polymer. Then, such nanocapsules are dispersed in water (see, for example, Patent Document 1).

### Citation List

### Patent Document

Patent Document 1: Japanese Unexamined Patent Publication No. 2000-191505

### SUMMARY OF THE INVENTION

### PROBLEM TO BE SOLVED BY THE INVENTION

On the other hand, in the above-described suspension, the nanocapsules may coagulate and solidify in water. In other words, the above-described suspension may not have sufficient storage stability (particularly, storage stability in a high-temperature environment (40°C or more)).

The present invention is a polyurethane dispersion having excellent storage stability and a coating material containing the polyurethane dispersion.

### MEANS FOR SOLVING THE PROBLEM

The present invention [1] includes a polyurethane dispersion including: water, a polyurethane resin dispersed in the water, and a water-insoluble compound encapsulated in the polyurethane resin, wherein the water-insoluble compound has an activity against a minute hazardous substance; and wherein the polyurethane resin contains an anionic group, and the polyurethane resin has an acid value of 8 to 25 mgKOH/g, and/or the polyurethane resin contains a polyoxyethylene group, and the polyurethane resin has an oxyethylene content rate of 8 to 20% by mass.

The present invention [2] includes the polyurethane dispersion described in the above-described [1], wherein the polyurethane resin contains an anionic group, and the polyurethane resin has an acid value of 10 to 20 mgKOH/g.

The present invention [3] includes the polyurethane dispersion described in the above-described [1] or [2], wherein a content of the water-insoluble compound is 0.5 to 18 parts by mass with respect to 100 parts by mass of the polyurethane resin; and wherein a solid content concentration of the polyurethane dispersion is more than 20% by mass.

The present invention [4] includes the polyurethane dispersion described in the above-described [1] or [2], wherein a content of the water-insoluble compound is more than 18 parts by mass with respect to 100 parts by mass of the polyurethane resin; and wherein a solid content concentration of the polyurethane dispersion is 20% by mass or less.

The present invention [5] includes the polyurethane dispersion described in any one of the above-described [1] to [4], wherein an amount of the water-insoluble compound dissolved in water is 1 g or less/100 g of water.

The present invention [6] includes the polyurethane dispersion described in any one of the above-described [1] to [5], wherein the water-insoluble compound is diiodomethyl-p-tolylsulfone.

The present invention [7] includes a coating material including: a polyurethane dispersion described in any one of the above-described [1] to [6].

### EFFECTS OF THE INVENTION

In the polyurethane dispersion and coating material of the present invention, the polyurethane resin is dispersed in water. In addition, a water-insoluble compound having an activity against a minute hazardous substance is encapsulated in a polyurethane resin. Then, the polyurethane resin has a predetermined acid value and/or a predetermined oxyethylene content rate.

Therefore, even when the above-described polyurethane dispersion and coating material contain a water-insoluble compound having an activity against a minute hazardous substance, aggregation and solidification of the polyurethane resin can be suppressed. As a result, the above-described polyurethane dispersion and coating material have excellent storage stability.

### DESCRIPTION OF THE EMBODIMENTS

### 1. Polyurethane Dispersion

A polyurethane dispersion (PUD) contains water, a polyurethane resin dispersible in water, and a water-insoluble compound encapsulated in the polyurethane resin.

### (1) Water

The water is a dispersion medium in the polyurethane dispersion. In other words, the polyurethane dispersion is an aqueous dispersion obtained by dispersing the polyurethane resin in the water.

### (2) Polyurethane Resin

As detailed below, the polyurethane resin contains an anionic group and/or a polyoxyethylene group as a hydrophilic group. The polyurethane resin is allowed to be dispersed in water by the hydrophilic group.

More specifically, the polyurethane resin is, for example, a reaction product of a polyurethane raw material component. The polyurethane raw material component contains, for example, a polyisocyanate component, an active hydrogen group-containing component, and a chain extension component.

### [Polyisocyanate Component]

The polyisocyanate component is a component containing a compound having two or more isocyanate groups in a molecule (hereinafter, a polyisocyanate compound). Examples of the polyisocyanate compound include a polyisocyanate monomer and a polyisocyanate derivative.

Examples of the polyisocyanate monomer include an aliphatic polyisocyanate, an aromatic polyisocyanate, and an araliphatic polyisocyanate.

Examples of the aliphatic polyisocyanate include trimethylene diisocyanate, tetramethylene diisocyanate, pentamethylene diisocyanate (PDI), hexamethylene diisocyanate (HDI), 1,2-propanediisocyanate, 1,2-butanediisocyanate, 2,3-butanediisocyanate, 1,3-butanediisocyanate, 2,4,4-trimethylhexamethylene diisocyanate, 2,2,4-trimethylhexamethylene diisocyanate, and 2,6-diisocyanatemethylcaproate. These may be used alone or in combination of two or more.

In addition, examples of the aliphatic polyisocyanate include an alicyclic polyisocyanate. Examples of the alicyclic polyisocyanate include isophorone diisocyanate (IPDI), norbomene diisocyanate (NBDI), methylene bis (cyclohexyl isocyanate) (hydrogenated diphenylmethane diisocyanate, H₁₂MDI), and bis (isocyanatomethyl) cyclohexane (hydrogenated xylylene diisocyanate, H₆XDI). Examples of the methylene bis (cyclohexyl isocyanate) include 4,4'-methylene bis (cyclohexyl isocyanate), 2,4'-methylene bis (cyclohexyl isocyanate), and 2,2'-methylene bis (cyclohexyl isocyanate). Examples of the bis(isocyanatomethyl)cyclohexane include 1,2-bis(isocyanatomethyl)cyclohexane, 1,3-bis(isocyanatomethyl)cyclohexane, and 1,4-bis(isocyanatomethyl)cyclohexane.

These may be used alone or in combination of two or more.

Examples of the aromatic polyisocyanate include tolylene diisocyanate (TDI), diphenylmethane diisocyanate (MDI), toluidine diisocyanate (TODI), paraphenylene diisocyanate, and naphthalene diisocyanate (NDI).

Examples of the araliphatic polyisocyanate include xylylene diisocyanate (XDI), and tetramethylxylylene diisocyanate (TMXDI).

Examples of the xylylene diisocyanate include 1,2-xylylene diisocyanate (o-XDI), 1,3-xylylene diisocyanate (m-XDI), and 1,4-xylylene diisocyanate (p-XDI).

Examples of the polyisocyanate derivative include a modified product obtained by modifying the above-described polyisocyanate monomer by a known method. Examples of the polyisocyanate derivative include a multimer, an isocyanurate-modified product, an allophanate-modified product, a polyol-modified product, a biuret-modified product, a urea-modified product, an oxadiazinetrione-modified product, and a carbodiimide-modified product. Further, examples of the polyisocyanate derivative include polymethylene polyphenylene polyisocyanate.

These may be used alone or in combination of two or more. From the viewpoint of solvent resistance and adhesion, as the polyisocyanate compound, preferably a polyisocyanate monomer is used, more preferably an alicyclic polyisocyanate monomer is used, and still more preferably an isophorone diisocyanate is used. Particularly preferably, the polyisocyanate component consists of isophorone diisocyanate.

### [Active Hydrogen Group-containing Component]

The active hydrogen group-containing component is a component containing an organic compound containing an active hydrogen group. Examples of the active hydrogen group include a hydroxyl group and an amino group, and preferably a hydroxyl group is used.

The active hydrogen group-containing component contains, for example, a hydrophilic group-containing active hydrogen compound. The hydrophilic group-containing active hydrogen compound is an organic compound having one or more hydrophilic groups and two or more active hydrogen groups in combination in one molecule. Examples of the hydrophilic group include an anionic group and a polyoxyethylene group, and preferably an anionic group is used. **In** other words, the polyurethane resin has an anionic group and/or a polyoxyethylene group as a hydrophilic group, and preferably has an anionic group as a hydrophilic group.

Examples of the hydrophilic group-containing active hydrogen compound include an anionic group-containing active hydrogen compound and a polyoxyethylene group-containing active hydrogen compound.

The anionic group-containing active hydrogen compound is an organic compound having one or more anionic groups and two or more active hydrogen groups in combination in one molecule. Examples of the anionic group include a carboxy group (carboxylic acid group) and a sulfo group (sulfonic acid group), and preferably a carboxy group is used.

Examples of the anionic group-containing active hydrogen compound include an organic compound having one carboxy group and two or more hydroxyl groups in a combination in one molecule, and more preferably an organic compound having one carboxy group and two hydroxyl groups in combination in one molecule. Examples of the organic compound having one carboxy group and two hydroxyl groups in combination in one molecule include a carboxy group-containing diol. Examples of the carboxy group-containing diol include dihydroxyalkanoic acid. Examples of the dihydroxyalkanoic acid include 2,2-dimethylol acetic acid, 2,2-dimethylol lactic acid, 2,2-dimethylolpropionic acid (also known as dimethylolpropionic acid, DMPA), 2,2-dimethylol butanoic acid, 2,2-dimethylol butyric acid, and 2,2-dimethylol valeric acid. These may be used alone or in combination of two or more. From the viewpoint of water dispersibility, preferably 2,2-dimethylol propionic acid is used.

Examples of the polyoxyethylene group-containing active hydrogen compound include a monool containing a polyoxyethylene group in the main chain, and a polyol containing a polyoxyethylene group in a side chain. In other words, the polyoxyethylene group-containing active hydrogen compound does not contain a polyol containing a polyoxyethylene group in the main chain. Therefore, the polyoxyethylene group-containing active hydrogen compound and a low molecular weight polyol (described later) and a high molecular weight polyol (described later) are distinguished from each other.

More specifically, examples of the polyoxyethylene group-containing active hydrogen compound include a one-end-capped polyoxyethylene glycol and a polyoxyethylene side chain-containing diol.

Examples of the one-end-capped polyoxyethylene glycol include an alkoxyethylene glycol (monoalkoxypolyethylene glycol) which is one-end-capped with an alkyl group. Examples of the alkyl group include an alkyl group having 1 to 20 carbon atoms, preferably an alkyl group having 1 to 10 carbon atoms is used, more preferably an alkyl group having 1 to 4 carbon atoms is used, still more preferably an alkyl group having 1 to 2 carbon atoms is used, and particularly preferably a methyl group and an ethyl group are used. More specifically, examples of the one-end-capped polyoxyethylene glycol include a methoxypolyethylene glycol (MeOPEG) and an ethoxypolyethylene glycol, and preferably a methoxypolyethylene glycol is used. The one-end-capped polyoxyethylene glycol has a number-average molecular weight (molecular weight in terms of polystyrene by GPC measurement) of, for example, 200 to 5000, preferably 400 to 2000.

The polyoxyethylene side chain-containing diol is a diol having a polyoxyethylene group on a side chain. The polyoxyethylene side chain-containing diol is produced by a known method. For example, a polyoxyethylene chain-containing monoisocyanate is obtained by reaction of a known diisocyanate with the above-described one-end-capped polyoxyethylene glycol. Further, a polyoxyethylene side chain-containing diol is obtained by reaction of a polyoxyethylene chain-containing monoisocyanate with a dialkanolamine. The polyoxyethylene side chain-containing diol has a number-average molecular weight (molecular weight in terms of polystyrene by GPC measurement) of, for example, 200 to 5000, preferably 400 to 2000.

These may be used alone or in combination of two or more. As the polyoxyethylene group-containing active hydrogen compound, preferably the one-end-capped polyoxyethylene glycol is used.

The hydrophilic group-containing active hydrogen compound can be used alone or in combination of two or more. **In** other words, as the hydrophilic group-containing active hydrogen compound, an anionic group-containing active hydrogen compound may be used alone, or a polyoxyethylene group-containing active hydrogen compound may be used alone, or an anionic group-containing active hydrogen compound and a polyoxyethylene group-containing active hydrogen compound may be used in combination. As the hydrophilic group-containing active hydrogen compound, preferably, an anionic group-containing active hydrogen compound is used alone.

The content ratio of the hydrophilic group-containing active hydrogen compound is adjusted based on the acid value (described later) and oxyethylene content rate (described later) of the polyurethane resin.

More specifically, for example, the content ratio of the anionic group-containing active hydrogen compound is adjusted so that the acid value of the polyurethane resin falls within a range described later. Further, for example, the content ratio of the polyoxyethylene group-containing active hydrogen compound is adjusted so that the oxyethylene content rate falls within the range described later.

The content ratio of the hydrophilic group-containing active hydrogen compound with respect to the total amount of the active hydrogen group-containing component is, for example, 1 to 30% by mass, preferably 2 to 20% by mass, more preferably 5 to 10% by mass.

The active hydrogen group-containing component may contain, for example, a low molecular weight polyol. The active hydrogen group-containing component preferably contains a low molecular weight polyol.

The low molecular weight polyol is an organic compound having two or more hydroxyl groups in a molecule and having a relatively low molecular weight. The relatively low molecular weight indicates a number average molecular weight of less than 500, preferably 400 or less.

The low molecular weight polyol does not have the above-described anionic group. In other words, the low molecular weight polyol is distinguished from the anionic group-containing active hydrogen compound. In addition, when the low molecular weight polyol has an oxyethylene group, the oxyethylene group is contained in the main chain of the low molecular weight polyol and is not contained in a side chain. In other words, the low molecular weight polyol is distinguished from the oxyethylene group-containing active hydrogen compound.

Examples of the low molecular weight polyol include a dihydric alcohol, a trihydric alcohol, and a tetrahydric or more alcohol. Examples of the dihydric alcohol include a dihydric alcohol having 1 to 20 carbon atoms. Examples of the dihydric alcohol having 1 to 20 carbon atoms include ethylene glycol, 1,2-propanediol, 1,3-propanediol, 1,2-butanediol, 1,3-butanediol, 1,4-butanediol, 1,5-pentanediol, 1,6-hexanediol, neopentyl glycol (NPG), diethylene glycol, triethylene glycol, dipropylene glycol, bisphenol A, 1,3-cyclohexanedimethanol, and 1,4-cyclohexanedimethanol (1,4-CHDM). Examples of the trihydric alcohol include a trihydric alcohol having 1 to 20 carbon atoms. Examples of the trihydric alcohol having 1 to 20 carbon atoms include glycerin and trimethylolpropane (TMP). Examples of the tetrahydric or more alcohol include pentaerythritol and diglycerin. Further, examples of the low molecular weight polyol include a polymer obtained by addition-polymerizing an alkylene (C2 to 3) oxide to a dihydric to trihydric alcohol so that the number-average molecular weight is less than 500. These low molecular weight polyols may be used alone or in combination of two or more. Preferably, a dihydric alcohol and a trihydric alcohol are used, and more preferably, neopentyl glycol and trimethylolpropane are used, and more preferably, neopentyl glycol is used.

The content ratio of the low molecular weight polyol is adjusted based on the acid value (described later) and oxyethylene content rate (described later) of the polyurethane resin. More specifically, the content ratio of the low molecular weight polyol with respect to the total amount of the active hydrogen group-containing component is, for example, 1 to 30% by mass, preferably 2 to 20% by mass, more preferably 5 to 10% by mass.

The active hydrogen group-containing component may contain, for example, a high molecular weight polyol. Preferably, the active hydrogen group-containing component contains a high molecular weight polyol.

The high molecular weight polyol is an organic compound having two or more hydroxyl groups in a molecule, and having a relatively high molecular weight. The relatively high molecular weight indicates a number average molecular weight of 500 or more, preferably 600 or more. The number average molecular weight indicates a number average molecular weight in terms of polystyrene by GPC measurement (the same applies hereinafter).

The high molecular weight polyol does not have the above-described anionic group. In other words, the high molecular weight polyol is distinguished from the anionic group-containing active hydrogen compound. In addition, when the high molecular weight polyol has an oxyethylene group, the oxyethylene group is contained in the main chain of the high molecular weight polyol and is not contained in a side chain. In other words, the high molecular weight polyol is distinguished from the oxyethylene group-containing active hydrogen compound.

Examples of the high molecular weight polyol include a polyether polyol, a polyester polyol, a polycarbonate polyol, a polyurethane polyol, an epoxy polyol, a vegetable oil polyol, a polyolefin polyol, an acrylic polyol, and a vinyl monomer-modified polyol. These can be used alone or in combination of two or more. As the high molecular weight polyol, preferably, a polyether polyol, a polyester polyol, and a polycarbonate polyol are used, and more preferably, a polycarbonate polyol is used.

The content ratio of the high molecular weight polyol is adjusted based on the acid value (described later) and oxyethylene content rate (described later) of the polyurethane resin. More specifically, the content ratio of the high molecular weight polyol, for example, with respect to the total amount of the active hydrogen group-containing component is, for example, 70 to 99% by mass, preferably 80 to 98% by mass, and more preferably 80 to 90% by mass.

The active hydrogen group-containing component preferably contains a hydrophilic group-containing active hydrogen compound, a low molecular weight polyol, and a high molecular weight polyol. The active hydrogen group-containing component more preferably consists of a hydrophilic group-containing active hydrogen compound, a low molecular weight polyol, and a high molecular weight polyol.

### [Chain Extension Component]

The chain extension component is a component containing an organic compound (hereinafter, a chain extender) which subjects an isocyanate group-terminated prepolymer (described later) to a chain extension reaction. Examples of the chain extender include a compound having two or more active hydrogen groups (amino groups and/or hydroxyl groups) in a molecule. More specifically, examples of the chain extender include a polyamine, an amino alcohol, and a low molecular weight polyol.

Examples of the polyamine include an aromatic polyamine, an araliphatic polyamine, an alicyclic polyamine, an aliphatic polyamine, and a polyoxyethylene group-containing polyamine. Examples of the aromatic polyamine include 4,4'-diphenylmethanediamine and tolylenediamine. Examples of the araliphatic polyamine include m-xylylenediamine (m-XDA) and p-xylylenediamine (p-XDA). Examples of the alicyclic polyamine include 3-aminomethyl-3,5,5-trimethylcyclohexylamine (also known as: isophoronediamine, IPDA), 4,4'-dicyclohexylmethanediamine, 2,5-bis(aminomethyl)bicyclo[2.2.1]heptane, 2,6-bis(aminomethyl)bicyclo[2.2.1]heptane, 1,4-cyclohexanediamine, 1-amino-3-aminomethyl-3,5,5-trimethylcyclohexane, bis-(4-aminocyclohexyl)methane, diaminocyclohexane, 3,9-bis(3-aminopropyl)-2,4,8,10-tetraoxaspiro[5,5]undecane, 1,3-bis (aminomethyl) cyclohexane (1,3-H₆XDA), and 1,4-bis (aminomethyl) cyclohexane (1,4-H₆XDA). Examples of the aliphatic polyamine include ethylenediamine (EDA), propylenediamine, 1,3-propanediamine, 1,4-butanediamine, 1,5-pentanediamine, 1,6-hexamethylenediamine, hydrazine and hydrate thereof (HYD), diethylenetriamine (DETA), triethylenetetramine, tetraethylenepentamine, 1,2-diaminoethane, 1,2-diaminopropane, and 1,3-diaminopentane. Examples of the polyoxyethylene group-containing polyamine include polyoxyalkylene ether diamine. Examples of the polyoxyalkylene ether diamine include polyoxyethylene ether diamine. Preferably, an aliphatic polyamine is used, and more preferably ethylenediamine (EDA) is used. These may be used alone or in combination of two or more.

Examples of the amino alcohol include 2-((2-aminoethyl)amino)ethanol (AEA) and 2-((2-aminoethyl)amino)-1-methylpropanol. Preferably, 2-((2-aminoethyl)amino)ethanol (AEA) is used. These may be used alone or in combination of two or more.

Examples of the low molecular weight polyol include the above-described low molecular weight polyols.

Further, examples of the chain extender include a compound having an alkoxysilyl group (hereinafter, an alkoxysilyl compound). That is, the chain extension component may contain an alkoxysilyl compound. Examples of the alkoxysilyl compound include an amino group-containing alkoxysilyl compound.

Examples of the amino group-containing alkoxysilyl compound include an alkoxysilyl compound having a primary amino group and not having a secondary amino group. Examples of the alkoxysilyl compound having a primary amino group and not having a secondary amino group include γ-aminopropyltrimethoxysilane, γ-aminopropyltriethoxysilane, and N-phenyl-γ-aminopropyltrimethoxysilane. These may be used alone or in combination of two or more.

Further, examples of the amino group-containing alkoxysilyl compound include an alkoxysilyl compound having a primary amino group and a secondary amino group. Examples of the alkoxysilyl compound having a primary amino group and a secondary amino group include N-2-(aminoethyl)-3-aminopropyltrimethoxysilane, N-2-(aminoethyl)-3-aminopropyltriethoxysilane, N-2-(aminoethyl)-3-aminopropylmethyl dimethoxysilane, and N-2-(aminoethyl)-3-aminopropylmethyl diethoxysilane. These may be used alone or in combination of two or more.

As an alkoxysilyl compound, preferably, an alkoxysilyl compound having a primary amino group and a secondary amino group is used, and more preferably, N-2-(aminoethyl)-3-aminopropyltrimethoxysilane and N-2-(aminoethyl)-3-aminopropylmethyldimethoxysilane are used, and further more preferably N-2-(aminoethyl)-3-aminopropyltrimethoxysilane is used.

These chain extenders may be used alone or in combination of two or more. As the chain extender, preferably, a polyamine is used, and more preferably, an aliphatic polyamine is used, and further more preferably, an ethylenediamine (EDA), hydrazine and a hydrate thereof (HYD) are used.

### [Production of Polyurethane Resin]

The polyurethane resin is obtained as a reaction product of the above-described polyurethane raw material component. In other words, a polyurethane resin is produced by reacting the above-described polyisocyanate component, the above-described active hydrogen group-containing component, and the above-described chain extension component.

More specifically, the polyurethane resin contains, for example, a chain extension reaction product of an isocyanate group-terminated prepolymer and a chain extension component, and is preferably a chain extension reaction product of an isocyanate group-terminated prepolymer and a chain extension component. The isocyanate group-terminated prepolymer contains a prepolymerization reaction product of a polyisocyanate component and an active hydrogen group-containing component, and is preferably a prepolymerization reaction product of a polyisocyanate component and an active hydrogen group-containing component.

In other words, the primary reaction product (prepolymerization reaction product) of the polyisocyanate component and the active hydrogen group-containing component is an isocyanate group-terminated prepolymer. Then, the secondary reaction product (chain extension reaction product) of the isocyanate group-terminated prepolymer and the chain extension component is a polyurethane resin. A method of producing the polyurethane resin is detailed below.

### [Prepolymerization Step]

In this method, first, the polyisocyanate component and the above-described active hydrogen group-containing component are subjected to a prepolymerization reaction to synthesize an isocyanate group-terminated prepolymer (prepolymerization step). In the synthesis of the isocyanate group-terminated prepolymer, for example, a known solution polymerization is employed.

More specifically, in this method, in an organic solvent under a nitrogen atmosphere, the above-described polyisocyanate component and the above-described active hydrogen group-containing component are blended in a predetermined equivalent ratio, and reacted (solution polymerized).

Examples of the organic solvent include a solvent inert to isocyanate groups. Examples of the organic solvent include acetone, methyl ethyl ketone, ethyl acetate, tetrahydro furan, and acetonitrile. These may be used alone or in combination of two or more.

In the prepolymerization step, the equivalent ratio (isocyanate group/active hydrogen group) of the isocyanate group in the polyisocyanate component to the active hydrogen group (hydroxyl group and amino group) in the active hydrogen group-containing component is, for example, more than 1, and preferably 1.1 or more. In addition, the equivalent ratio (isocyanate group/active hydrogen group) of the isocyanate group in the polyisocyanate component to the active hydrogen group (hydroxyl group and amino group) in the active hydrogen group-containing component is, for example, 20 or less, preferably 10 or less.

In the prepolymerization step, the reaction temperature is, for example, 20 to 80°C. The reaction time is, for example, 1 to 20 hours. Further, if necessary, a catalyst can be added. Examples of the catalyst include an amine-based catalyst and an organometallic catalyst. These may be used alone or in combination of two or more. The amount of the catalyst to be added is appropriately set depending on the purpose and use.

In addition, in the prepolymerization step, the above-described polymerization is continued until the isocyanate group concentration of the reaction product solution reaches a predetermined value. The isocyanate group concentration is, for example, 1 to 30% by mass, preferably 5 to 20% by mass.

Thereafter, if necessary, an unreacted polyisocyanate component is removed from the reaction product solution by a known removal method. Examples of the removal method include distillation and extraction. Thus, an isocyanate group-terminated prepolymer is obtained. More specifically, a solution (organic solvent solution) of the isocyanate group-terminated prepolymer in the above-described organic solvent is obtained.

The average number of isocyanate groups of the isocyanate group-terminated prepolymer is, for example, 1.5 or more, preferably 1.9 or more, and more preferably 2.0 or more. Further, the average number of isocyanate groups of the isocyanate group-terminated prepolymer is, for example, 3.0 or less, preferably 2.5 or less.

### [Neutralization Step]

Next, in this method, the isocyanate group-terminated prepolymer is neutralized, if necessary. In other words, when the active hydrogen group-containing compound contains an anionic group-containing active hydrogen compound, the above-described isocyanate group-terminated prepolymer has an anionic group. Thus, preferably, the isocyanate group-terminated prepolymer is neutralized with a neutralizer to form the salt of the anionic group.

Examples of the neutralizer include conventional bases. Specific examples of the bases include an organic base and an inorganic base. The bases indicate Lewis bases. An organic base is a Lewis base containing an organic component. Examples of the organic base include a tertiary amine and a secondary amine. Examples of the tertiary amine include a trialkylamine and an alkanolamine. Examples of the trialkylamine include a trialkylamine having 1 to 4 carbon atoms. Examples of such a trialkylamine include a trimethylamine (TMA) and a triethylamine (TEA). Examples of the alkanolamine include a dimethylethanolamine, a methyldiethanolamine, a triethanolamine, and a triisopropanolamine. Examples of the secondary amine include a heterocyclic amine. Examples of the heterocyclic amine include morpholine. These organic bases may be used alone or in combination of two or more. An inorganic base is a Lewis base consisting of an inorganic component. Examples of the inorganic base include ammonia, a compound containing an alkali metal, and a compound containing an alkaline-earth metal. Examples of the compound containing an alkali metal include, for example, alkali metal hydroxide, alkali metal carbonate, and alkali metal hydrogencarbonate. Examples of the alkali metal hydroxide include lithium hydroxide (LiOH), sodium hydroxide (NaOH), and potassium hydroxide (KOH). Examples of the alkali metal carbonate include sodium carbonate and potassium carbonate. Examples of the alkali metal hydrogencarbonate include sodium hydrocarbon and potassium hydrocarbon. Examples of the compound containing an alkaline earth metal include an alkaline-earth metal hydroxide and an alkaline-earth metal carbonate. Examples of the alkaline earth metal hydroxide include magnesium hydroxide and calcium hydroxide. Examples of the alkaline-earth metal carbonate include magnesium carbonate and calcium carbonate. Further, the inorganic base may be a hydrate. These inorganic bases may be used alone or in combination of two or more. These neutralizers may be used alone or in combination of two or more.

The method of neutralizing the isocyanate group-terminated prepolymer is not particularly limited. For example, a neutralizer is added to the isocyanate group-terminated prepolymer. The amount of the neutralizer added with respect to 1 equivalent of anionic groups in the isocyanate group-terminated prepolymer is, for example, 0.4 to 1.2 equivalents, preferably 0.6 to 1.0 equivalents.

### [Chain Extension Reaction]

Next, in this method, the isocyanate group-terminated prepolymer is chain-extended. More specifically, the isocyanate group-terminated prepolymer (primary reaction product) and the chain extension component are reacted to obtain a polyurethane resin (secondary reaction product). For example, by reacting the isocyanate group-terminated prepolymer with the chain extension component in water, a polyurethane resin is formed and water-dispersed.

The method of reacting the isocyanate group-terminated prepolymer with the chain extension component in water is not particularly limited. For example, first, the isocyanate group-terminated prepolymer is water-dispersed. Then, the chain extension component is added to the water in which the isocyanate group-terminated prepolymer is dispersed, and the isocyanate group-terminated prepolymer is chain-extended in the water. The method of water-dispersing the isocyanate group-terminated prepolymer is not particularly limited. For example, while the isocyanate group-terminated prepolymer is being stirred, water is added to the isocyanate group-terminated prepolymer. In this case, the water is 100 to 1000 parts by mass with respect to 100 parts by mass of the isocyanate group-terminated prepolymer. Thereafter, while the water in which the isocyanate group-terminated prepolymer is water-dispersed is being stirred, the chain extension component is added dropwise into the water. In this case, the equivalent ratio (active hydrogen group/isocyanate group) of the active hydrogen group of the chain extension component to the isocyanate group of the isocyanate group-terminated prepolymer is, for example, 0.8 to 1.2. The chain extension reaction is completed, for example, at room temperature. The time to completion of the reaction is, for example, 0.1 to 10 hours.

Then, by the above-described chain extension reaction, the above-described polyurethane resin is obtained as a polyurethane dispersion.

The urethane-urea group concentration of the polyurethane resin is, for example, 10 to 50% by mass, preferably 20 to 40% by mass. The urethane-urea group concentration of the polyurethane resin can be calculated from the charge ratio of the raw material components in accordance with Examples described later.

In addition, in this method, to adjust the solid content concentration, the organic solvent and/or water can be removed after the completion of the reaction. In addition, in this method, to adjust the solid content concentration, water can be added after the completion of the reaction. The solid content concentration may be appropriately set depending on the purpose and use.

The solid content concentration of the polyurethane dispersion is, for example, 1 to 50% by mass, preferably 10 to 40% by mass.

Then, the polyurethane resin preferably has a predetermined acid value and/or a predetermined oxyethylene content rate from the viewpoint of the storage stability when a water-insoluble compound is encapsulated.

More specifically, when the polyurethane resin contains an anionic group, the acid value of the polyurethane resin is 8 to 25 mgKOH/g, preferably 10 to 20 mgKOH/g, more preferably 12 to 18 mgKOH/g, and even more preferably 14 to 16 mgKOH/g, from the viewpoint of the storage stability when a water-insoluble compound is encapsulated and the effectiveness of the water-insoluble compound. Further, the lower limit of the acid value of the polyurethane resin is 8 mgKOH/g or more, preferably 10 mgKOH/g or more, more preferably 12 mgKOH/g or more, and still more preferably 14 mgKOH/g or more. Further, the upper limit of the acid value of the polyurethane resin is 25 mgKOH/g or less, preferably 20 mgKOH/g or less, more preferably 18 mgKOH/g or less, and still more preferably 16 mgKOH/g or less. The acid value of the polyurethane resin is calculated from the formulation of the polyurethane raw material components.

In addition, when the polyurethane resin contains a polyoxyethylene group, the polyurethane resin has an oxyethylene content rate with respect to the total amount of the polyurethane resin is 8 to 20% by mass, preferably 10 to 19% by mass, and more preferably 12 to 18% by mass from the viewpoint of the storage stability when a water-insoluble compound is encapsulated. Further, the lower limit of the oxyethylene content rate of the polyurethane resin with respect to the total amount of the polyurethane resin is 8% by mass or more, preferably 10% by mass or more, more preferably 12% by mass or more. In addition, the upper limit of the oxyethylene content rate of the polyurethane resin with respect to the total amount of the polyurethane resin is 20% by mass or less, preferably 19% by mass or less, and more preferably 18% by mass or less. The oxyethylene content rate of the polyurethane resin is calculated from the formulation of the polyurethane raw material components.

The polyurethane resin may have one of the above-described acid value and the above-described oxyethylene content rate, or may have both of them.

In other words, examples of the polyurethane resin include a polyurethane resin only having the above-described acid value, a polyurethane resin only having the above-described oxyethylene content rate, and a polyurethane resin having both the above-described acid value and oxyethylene content rate. As the polyurethane resin, preferably, a polyurethane resin only having the above-described acid value is used.

The above-described description is merely a description of the polyurethane resin, and the above-described polyurethane dispersion is a polyurethane dispersion that does not contain a water-insoluble compound. The details of the polyurethane dispersion containing a water-insoluble compound is described later.

### (3) Water-insoluble Compound

A water-insoluble compound is a compound that is little or no soluble in water. Being water-insoluble is defined, for example, by the amount of dissolution with respect to 100g of water.

The amount of the water-insoluble compound dissolved with respect to water is, for example, 1g/100g of water or less, preferably 0.1g or less/100 g of water. The amount of dissolution with respect to water is measured by a flask method described in OECD Test Guideline 105.

Examples of the water-insoluble compound include a water-insoluble compound having an activity against a minute hazardous substance. Hereinafter, a compound having an activity against a minute hazardous substance is referred to as a minute hazardous substance-resistant water-insoluble compound.

The minute hazardous substance is a hazardous substance in a microscopic size (e.g., 10 µm or less). Examples of the minute hazardous substance include known bacteria, known viruses, known fungi, and known algae. More specifically, examples of bacteria include Escherichia coli (Escherichia coli), Salmonella typhimurium (Salmonella typhimurium), Bacillus sutilis (Bacillus sutilis), Pseudomonas aeraginosa (Pseudomonas aeraginosa), Klebsiella pneumoniae (Klebsiella pneumoniae), Vibrio parahaemolyticus (Vibrio parahaemolyticus), Trichophyton mentagrophytes (Trichophyton mentagrophytes), Methicillin-resistant Staphylococcus aureus (MRSA), and Staphylococus aureus (Staphylococus aureus).

Examples of the viruses include, for example, enveloped viruses and non-enveloped viruses. Examples of the viruses also include DNA viruses and RNA viruses. More specifically, examples of the viruses include, for example, human herpes virus, vaccinia virus, hepatitis B virus, influenza virus, SARS coronavirus, RS virus, mumps virus, Lassa virus, dengue virus, rubella virus, human immunodeficiency virus, measles virus, hepatitis C virus, Ebola virus, yellow fever virus, Japanese encephalitis virus, adenovirus, B19 virus, papovavirus, human papillomaviruses, norovirus, polio virus, echovirus, hepatitis virus, rhinovirus, astrovirus, rotavirus, coxsackievirus, enterovirus, sapovirus, and feline calicivirus. Examples of the fungus include black mold (Cladosporium), blue mold (Penicillium citrinum), and black aspergillus (Aspergillus niger). Examples of the fungus also include Cladosporium (Cladosporium), Alternaria (Alternaria), Penicillium (Penicillium), and Auoreobasidium (Auoreobasidium). Examples of the algae include Chlorella (Chlorella), Anabaena (Anabaena), Phormidium (Phormidium), and Trebouxiophyceae (Trebouxiophyceae). These can be used alone or in combination of two or more.

The minute hazardous substance-resistant water-insoluble compound may have an activity against at least any one of the above-described minute hazardous substances. In other words, the minute hazardous substance-resistant water-insoluble compound may have at least one activity selected from the group consisting of antibacterial properties, antiviral properties, antifungal properties, and algal resistance. In addition, the minute hazardous substance-resistant water-insoluble compound may have an activity against a plurality of kinds of minute hazardous substances.

More specifically, examples of the minute hazardous substance-resistant water-insoluble compound include a diiodomethane compound. Examples of the diiodomethane compound include the diiodomethane compound described in paras. [0010] to [0028] of Japanese Unexamined Patent Publication No. 2023-030501. More specifically, examples of the diiodomethane compound include diiodomethyl-p-tolylsulfone (hereinafter, DMTS), diiodomethyl-o-tolylsulfone, diiodomethyl-m-tolylsulfone, diiodomethyl-p-chlorophenyl sulfone, diiodomethyl-p-bromophenyl sulfone, diiodomethyl-p-ethylphenyl sulfone, diiodomethyl-p-propylphenyl sulfone, diiodomethyl phenyl ketone, diiodomethyl (4-methylphenyl) ketone, diiodomethyl (4-chlorophenyl) ketone, and methyl 2,2-diiodo-3-oxo-3-phenyl propionate.

The diiodomethane compound may be a commercial product. Examples of the commercial product include YOHTOL DP95 (manufactured by Mitsui Chemicals, Inc.).

The minute hazardous substance-resistant water-insoluble compound is not limited to the above-described diiodomethane compounds. Examples of the minute hazardous substance-resistant water-insoluble compound include iodopropynyl butyl carbamate (IPBC), 2-n-octyl-4-isothiazoline-one (OIT), 2-(4-thiazolyl)benzimidazole (TBZ), 4-chloro-3-methylphenol (PCMC), s-triazine-1,3,5-triethanol, and 1,2-benzoisothiazole-3(2H)-one (BIT).

These may be used alone or in combination of two or more. As the minute hazardous substance-resistant water-insoluble compound, preferably, a diiodomethane compound is used, more preferably, a diiodomethyl-p-tolylsulfone, a diiodomethyl-o-tolylsulfone, a diiodomethyl-m-tolylsulfone, and a diiodomethyl-p-chlorophenylsulfone are used, and even more preferably, a diiodomethyl-p-tolylsulfone is used.

The content of the water-insoluble compound is adjusted, for example, as a mass ratio of the minute hazardous substance-resistant water-insoluble compound with respect to the polyurethane resin. For example, from the viewpoint of storage stability, the content of the water-insoluble compound (solid content) with respect to 100 parts by mass of the polyurethane resin (solid content) is, for example, 0.1 to 50 parts by mass, preferably 0.3 to 40 parts by mass, and more preferably 0.5 to 30 parts by mass. In addition, from the viewpoint of effectiveness of the water-insoluble compound, the lower limit of the content of the water-insoluble compound (solid content) with respect to 100 parts by mass of the polyurethane resin (solid content) is, for example, 0.1 parts by mass or more, preferably 0.3 parts by mass or more, more preferably 0.5 parts by mass or more. In addition, from the viewpoint of storage stability, the upper limit of the content of the water-insoluble compound (solid content) with respect to 100 parts by mass of the polyurethane resin (solid content) is, for example, 50 parts by mass or less, preferably 40 parts by mass or less, more preferably 30 parts by mass or less.

Further, preferably, the content of the water-insoluble compound with respect to the polyurethane resin is adjusted according to the solid content concentration of the polyurethane dispersion, as detailed later.

### (4) Another Component

The polyurethane dispersion can contain another component (other than the water, the polyurethane resin, and the minute hazardous substance-resistant water-insoluble compound). Examples of the additive include a heat-resistant stabilizer, a light-resistant stabilizer, an ultraviolet absorber, an antioxidant, a surfactant, a pH modifier, a defoaming agent, a rust inhibitor, a viscosity modifier, a chelating agent, an antistatic agent, a binder, a perfume, a dye, and a pigment. Further, examples of the additive include a water-soluble compound having an activity against a minute hazardous substance, and specifically examples thereof include a water-soluble antibacterial agent, a water-soluble antiviral agent, a water-soluble antifungal agent, and a water-soluble algae resistance. These may be used alone or in combination of two or more. The amount of the additive to be added and the timing of the addition are appropriately set according to the type of the additive.

### (5) Production of Polyurethane Dispersion Containing Minute Hazardous Substance-resistant Water-insoluble Compound

As described above, the polyurethane resin is produced and dispersed in water by the above-described method. Then, the minute hazardous substance-resistant water-insoluble compound is encapsulated in particles (droplets) of the polyurethane resin in water.

Hereinafter, a method of producing a polyurethane dispersion containing the minute hazardous substance-resistant water-insoluble compound is detailed.

### [Prepolymerization Step]

In this method, for example, first, the polyisocyanate component and the above-described active hydrogen group-containing component are subjected to a prepolymerization reaction by the above-described solution polymerization (prepolymerization step). Thus, a solution (organic solvent solution) of the isocyanate group-terminated prepolymer is obtained.

### [Addition Step]

Next, in this method, before the neutralization step and the chain extension step, the isocyanate group-terminated prepolymer solution (organic solvent solution) and the minute hazardous substance-resistant water-insoluble compound are mixed (addition step).

More specifically, in this method, the minute hazardous substance-resistant water-insoluble compound is added to the above-described isocyanate group-terminated prepolymer solution and mixed. The amount of the minute hazardous substance-resistant water-insoluble compound to be added is adjusted, for example, according to the solid content concentration of the finally obtained polyurethane dispersion as detailed later.

The minute hazardous substance-resistant water-insoluble compound may be solid and may be a solution, and is preferably a solution. A solution of the minute hazardous substance-resistant water-insoluble compound is prepared, for example, by dissolving a water-insoluble compound in the above-described organic solvent. As the organic solvent, preferably the same kind of organic solvent as used in the above-described solution polymerization of the isocyanate group-terminated prepolymer is used. The solid content concentration of the water-insoluble compound solution is not particularly limited, and is appropriately set depending on the purpose and use.

Then, a mixed solution is obtained by mixing the isocyanate group-terminated prepolymer solution and the minute hazardous substance-resistant water-insoluble compound by an appropriate method. The mixing conditions are not particularly limited. For example, a condition under which the isocyanate group-terminated prepolymer solution and the minute hazardous substance-resistant water-insoluble compound can be homogeneously mixed is appropriately set.

The amount of the minute hazardous substance-resistant water-insoluble compound to be added is adjusted, for example, so as to be in the above-described ratio (solid content ratio) with respect to the finally obtained polyurethane resin.

### [Neutralization Step]

Next, in this method, a neutralizer is added, if necessary, after the addition of the minute hazardous substance-resistant water-insoluble compound. In other words, the above-described neutralizer is added to the mixed solution of the isocyanate group-terminated prepolymer solution and the minute hazardous substance-resistant water-insoluble compound. Thus, the isocyanate group-terminated prepolymer is neutralized. The method of neutralizing the isocyanate group-terminated prepolymer conforms to the above-described method.

### [Chain Extension Reaction]

Next, in this method, the isocyanate group-terminated prepolymer is chain-extended in the presence of the minute hazardous substance-resistant water-insoluble compound. In other words, a chain extension component is blended into the mixed solution of the isocyanate group-terminated prepolymer solution and the minute hazardous substance-resistant water-insoluble compound. Then, in the presence of the minute hazardous substance-resistant water-insoluble compound, the isocyanate group-terminated prepolymer and the chain extension component are reacted in water.

More specifically, in this method, while the above-described mixed solution (the mixed solution of the isocyanate group-terminated prepolymer solution and the minute hazardous substance-resistant water-insoluble compound) is being stirred, water is added to the mixed solution. In this case, the water is 100 to 1000 parts by mass with respect to 100 parts by mass of the mixed solution.

Thus, the isocyanate group-terminated prepolymer is dispersed in the water. The isocyanate group-terminated prepolymer forms particles (droplets) when dispersed in the water. At the time the minute hazardous substance-resistant water-insoluble compound is encapsulated in the particles (droplets) of the isocyanate group-terminated prepolymer.

Next, in this method, a chain extension component is added to the water in which the isocyanate group-terminated prepolymer is dispersed to chain-extend the isocyanate group-terminated prepolymer in the water. In addition, in this method, water can be added after the completion of the reaction to adjust the solid content concentration.

By the above-described chain extension reaction, a polyurethane resin is obtained as a reaction product of the polyurethane raw material component. In addition, the minute hazardous substance-resistant water-insoluble compound is encapsulated in the particles of the polyurethane resin. In other words, capsule particles each having a core material containing the minute hazardous substance-resistant water-insoluble compound and a wall material containing the polyurethane resin are dispersed in water.

In this method, to adjust the solid content concentration, the organic solvent and/or water can be removed after the completion of the reaction. In addition, in this method, water can be added after the completion of the reaction to adjust the solid content concentration. The solid content concentration may be appropriately set depending on the purpose and use.

The solid content concentration of the polyurethane dispersion is, for example, 1 to 50% by mass, preferably 10 to 40% by mass. Further, the lower limit of the solid content concentration of the polyurethane dispersion is, for example, 1% by mass or more, preferably 10% by mass or more. Further, the upper limit of the solid content concentration of the polyurethane dispersion is, for example, 50% by mass or less, preferably 40% by mass or less.

In addition, from the viewpoint of storage stability, preferably, the solid content concentration of the polyurethane dispersion and the content of the water-insoluble compound with respect to the polyurethane resin are mutually adjusted.

For example, when the content of the water-insoluble compound with respect to the polyurethane resin is relatively low, a decrease in storage stability derived from the water-insoluble compound tends not to occur, and thus the solid content concentration of the polyurethane dispersion can be adjusted relatively high.

More specifically, when the content of the water-insoluble compound is relatively low, the content of the water-insoluble compound with respect to 100 parts by mass of the polyurethane resin (solid content) is, for example, 0.3 to 20 parts by mass, preferably 0.5 to 18 parts by mass, more preferably 1.0 to 15 parts by mass, still more preferably 3.0 to 12 parts by mass, particularly preferably 5.0 to 12 parts by mass. In addition, from the viewpoint of effectiveness of the water-insoluble compound, the lower limit of the content of the water-insoluble compound (solid content) with respect to 100 parts by mass of the polyurethane resin (solid content) is, for example, 0.3 parts by mass or more, preferably 0.5 parts by mass or more, more preferably 1.0 parts by mass or more, still more preferably 3.0 parts by mass or more, and particularly preferably 5.0 parts by mass or more. In addition, from the viewpoint of storage stability, the upper limit of the content of the water-insoluble compound (solid content) with respect to 100 parts by mass of the polyurethane resin (solid content) is, for example, 18 parts by mass or less, more preferably 15 parts by mass or less, particularly preferably 12 parts by mass or less. Then, when the content of the water-insoluble compound is relatively low, the solid content concentration of the polyurethane dispersion is, for example, more than 20% by mass, preferably 25% by mass or more, more preferably 30% by mass or more. Further, the solid content concentration of the polyurethane dispersion is, for example, 50% by mass or less, preferably 40% by mass or less.

On the other hand, when the content of the water-insoluble compound with respect to the polyurethane resin is relatively high, a decrease in storage stability derived from the water-insoluble compound tends to occur, and thus preferably, the solid content concentration of the polyurethane dispersion is adjusted relatively low.

More specifically, when the content of the water-insoluble compound is relatively high, the content of the water-insoluble compound with respect to 100 parts by mass of the polyurethane resin (solid content) is, for example, more than 18 parts by mass, and preferably 20 parts by mass or more. Further, the content of the water-insoluble compound with respect to 100 parts by mass of the polyurethane resin (solid content) is, for example, 50 parts by mass or less. Then, when the content of the water-insoluble compound is relatively high, the solid content concentration of the polyurethane dispersion is, for example, 20% by mass or less, preferably 18% by mass or less. Further, the solid content concentration of the polyurethane dispersion is, for example, 1% by mass or more, preferably 10% by mass or more.

### 2. Coating Material

The above-described polyurethane dispersion is preferably used as a coating material. More specifically, the coating material contains the above-described polyurethane dispersion (i.e., a polyurethane dispersion containing the minute hazardous substance-resistant water-insoluble compound).

The coating material may contain the above-described additives, if necessary. The additives can be used alone or in combination of two or more. The amount of the additive to be added and the timing of the addition are appropriately set according to the type of the additive.

Further, the coating material may contain a known aqueous solvent, if necessary. The purpose of adding an aqueous solvent to the coating material is not particularly limited, and examples thereof include adjustment of the solid content concentration, adjustment of the coatability (viscosity and wettability), and adjustment of the drying properties. Examples of the aqueous solvent include water, a lower alcohol, and glycol ether. Examples of the lower alcohol include methanol, ethanol, propanol, isopropanol (iPA), and butanol. Examples of the glycol ether include ethylene glycol monoethyl ether and propylene glycol monomethyl ether. These may be used alone or in combination of two or more.

The solid content concentration of the coating material is appropriately set depending on the purpose and use. For example, the solid content concentration of the coating material is, for example, 1 to 50% by mass, preferably 10 to 40% by mass. Further, the lower limit of the solid content concentration of the coating material is, for example, 1% by mass or more, preferably 10% by mass or more. Further, the upper limit of the solid content concentration of the coating material is, for example, 50% by mass or less, preferably 40% by mass or less.

In addition, the coating material may contain an aqueous solution and/or a dispersion of another aqueous resin, if necessary.

More specifically, the coating material may contain, for example, another aqueous resin (i.e., an aqueous resin that does not contain the minute hazardous substance-resistant water-insoluble compound) to adjust the concentration of the minute hazardous substance-resistant water-insoluble compound. In addition, the coating material may contain, for example, another aqueous resin as a main agent, and may also contain the above-described polyurethane dispersion (polyurethane dispersion containing the minute hazardous substance-resistant water-insoluble compound) as an additive. The other aqueous resin is not particularly limited, and examples thereof include a polyurethane resin (a polyurethane resin in which the minute hazardous substance-resistant water-insoluble compound is not encapsulated), an acrylic resin, a polyvinyl alcohol resin, a polyvinyl pyrrolidone resin, a polyester resin, a polyether resin, a melamine resin, and an epoxy resin. These may be used alone or in combination of two or more. As the other aqueous resin, preferably a polyurethane resin and an acrylic resin are used. In other words, as the aqueous solution and/or dispersion of the other aqueous resin, preferably a polyurethane dispersion containing no minute hazardous substance-resistant water-insoluble compound and an acrylic emulsion are used.

The polyurethane dispersion containing no minute hazardous substance-resistant water-insoluble compound is produced, for example, by subjecting the above-described polyurethane raw material component to a prepolymerization reaction and a chain extension reaction (and, if necessary, a neutralization reaction) without adding the minute hazardous substance-resistant water-insoluble compound in the above-described method.

The acrylic emulsion is produced, for example, by a method of emulsion polymerization of an arbitrary acrylic monomer, and a method of mechanically forcing an acrylic polymer to be emulsified.

Then, a mixed aqueous solution and/or dispersion is obtained by mixing the polyurethane dispersion containing the minute hazardous substance-resistant water-insoluble compound with the aqueous solution and/or dispersion of the other aqueous resin. The mixed aqueous solution and/or dispersion is used as a coating material.

The mixed aqueous solution and/or dispersion have (has) the polyurethane resin in which the minute hazardous substance-resistant water-insoluble compound is encapsulated (hereinafter, an encapsulation polyurethane resin) and the other aqueous resin (hereinafter, a non-encapsulation resin) in combination. When the coating material has both the encapsulation polyurethane resin and the non-encapsulation resin in combination, the physical properties of the coating film (coating film) can be adjusted by adjusting the ratios of the encapsulation polyurethane resin and the non-encapsulation resin.

For example, from the viewpoint of the effectiveness of the water-insoluble compound, and the mechanical strength and water resistance of the coating film, with respect to 100 parts by mass of the total of the encapsulation polyurethane resin and the non-encapsulation resin, the ratio of the encapsulation polyurethane resin is 10 to 90 parts by mass, preferably 30 to 70 parts by mass, more preferably 40 to 60 parts by mass. In addition, with respect to 100 parts by mass of the total of the encapsulation polyurethane resin and the non-encapsulation resin, the ratio of the non-encapsulation resin is 10 to 90 parts by mass, preferably 30 to 70 parts by mass, and more preferably 40 to 60 parts by mass.

In addition, in the coating material, the content of the water-insoluble compound (solid content) can be adjusted, for example, as a ratio with respect to the total amount of the solid content of the resin (the sum of the polyurethane resin in the above-described polyurethane dispersion and the other aqueous resin). For example, with respect to the total amount of the solid content of the resin (the sum of the polyurethane resin in the above-described polyurethane dispersion and the other aqueous resin), the content of the water-insoluble compound (solid content) is, for example, 0.1 to 30 parts by mass, preferably 0.3 to 20 parts by mass, more preferably 0.5 to 18 parts by mass, still more preferably 1.0 to 15 parts by mass, particularly preferably 3.0 to 12 parts by mass. In addition, from the viewpoint of effectiveness of the water-insoluble compound, with respect to 100 parts by mass of the total amount of the solid content of the resin (the sum of the polyurethane resin in the above-described polyurethane dispersion and the other aqueous resin), the lower limit of the content of the water-insoluble compound (solid content) is, for example, 0.1 parts by mass or more, preferably 0.3 parts by mass or more, more preferably 0.5 parts by mass or more, still more preferably 1.0 parts by mass or more, particularly preferably 3.0 parts by mass or more. In addition, from the viewpoint of storage stability, with respect to 100 parts by mass of the total amount of the solid content of the resin (the sum of the polyurethane resin in the above-described polyurethane dispersion and the other aqueous resin), the upper limit of the content of the water-insoluble compound (solid content) is, for example, 30 parts by mass or less, preferably 20 parts by mass or less, more preferably 18 parts by mass or less, still more preferably 15 parts by mass or less, particularly preferably 12 parts by mass or less.

### 3. Operations and Effects

In the above-described polyurethane dispersion and coating material, the polyurethane resin is dispersed in the water. In addition, the minute hazardous substance-resistant water-insoluble compound is encapsulated in the polyurethane resin. Then, the polyurethane resin has a predetermined acid value and/or a predetermined oxyethylene content rate.

Therefore, the above-described polyurethane dispersion and coating material can suppress the aggregation and solidification of the polyurethane resin even if the polyurethane dispersion and coating material contain the minute hazardous substance-resistant water-insoluble compound.

As a result, the above-described polyurethane dispersion and coating material have excellent storage stability.

Further, in the above-described polyurethane dispersion and coating material, the minute hazardous substance-resistant water-insoluble compound is encapsulated in the polyurethane resin without being subjected to a hydrophilic treatment.

Therefore, the coating film of the above-described polyurethane dispersion and coating material has excellent water resistance.

### 4. Uses

The above-described polyurethane dispersion and coating material are used in a known method. For example, the polyurethane dispersion and coating material are applied to an arbitrary object to be coated. The polyurethane dispersion and coating material are dried on the surface of the object to be coated, and a coating film is formed. Such a coating film has various activities, for example, depending on the water-insoluble compound.

More specifically, in the above-described polyurethane dispersion and coating material, the water-insoluble compound has activities against various minute hazardous substances.

For example, if the minute hazardous substance-resistant water-insoluble compound has an activity against bacteria, the coating film has an antibacterial activity. Also, for example, if the minute hazardous substance-resistant water-insoluble compound has an activity against viruses, the coating film has an antiviral activity. Also, for example, if the minute hazardous substance-resistant water-insoluble compound has an activity against fungi, the coating film has an antifungal activity. Also, for example, if the minute hazardous substance-resistant water-insoluble compound has an activity against algae, the coating film has an anti-algae activity.

Thus, examples of the uses of the polyurethane dispersion and coating material include antibacterial agents, antiviral agents, antifungal agents, and anti-algal agents.

### Examples

Next, the present invention is described based on Examples and Comparative Examples. The present invention is however not limited by the following Examples. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### 1. PUD

### [PUD Containing No Water-insoluble Compound]

### Production Example 1

### (1) Prepolymerization Step

A four-neck flask equipped with a stirrer, a thermometer, a reflux tube, and a nitrogen inlet tube was charged with 154.2 parts by mass of UH-200 (trade name ETERNACOLL UH-200, active hydrogen group-containing component (polycarbonate diol), number-average molecular weight: 2000, UBE Corporation), 16.1 parts by mass of NPG (active hydrogen group-containing component, neopentyl glycol), 10.3 parts by mass of DMPA (active hydrogen group-containing component, dimethylol propionate), and 49.9 parts by mass of MEK (solvent, methyl ethyl ketone).

To the above-described flask, next, 102.9 parts by mass of IPDI (polyisocyanate component, isophorone diisocyanate) was added. Then, the contents of the flask were subjected to a urethanization reaction (prepolymerization reaction) at 80°C, thereby obtaining a reaction solution containing an isocyanate group-terminated prepolymer. The urethanization reaction was continued until the isocyanate group concentration (NCO concentration) of the reaction solution reached 3.9% by mass.

### (2) Neutralization Step

Next, 74.9 parts by mass of MEK (solvent, methyl ethyl ketone) was added to the above-described reaction solution, and the reaction solution was cooled to 30°C

Next, 7.6 parts by mass of TEA (triethylamine, neutralizer) was added to the above-described reaction solution (diluted solution) to neutralize the isocyanate group-terminated prepolymer.

Next, while the above-described reaction solution (neutralized solution) was being stirred, 700.1 parts by mass of ion-exchanged water was gradually added to the reaction solution to water-disperse the isocyanate group-terminated prepolymer. Thus, an aqueous dispersion of the isocyanate group-terminated prepolymer was prepared.

### (3) Chain Extension Step

Next, 8.8 parts by mass of EDA (chain extension component, ethylenediamine) was added to the aqueous dispersion of the isocyanate group-terminated prepolymer to subject the isocyanate group-terminated prepolymer to a chain extension reaction. The chain extension reaction was continued for 1 hour. Under reduced pressure at 50°C, MEK was distilled off, and also ion-exchanged water was added to adjust the solid content concentration to 30.0% by mass. Thus, a polyurethane dispersion was obtained. More specifically, a polyurethane dispersion (PUD-A) containing no water-insoluble compound was obtained.

### Production Examples 2 to 8

Polyurethane dispersions (PUD-B to PUD-H) were obtained in the same manner as in Production Example 1, except that the formulation was changed to those described in Table 1.

### [PUD Containing Water-insoluble Compound]

### Example 1

### (1) Prepolymerization Step

According to the formulation of Table 2, in the same manner as in Production Example 1 (PUD-A), a polyisocyanate component and an active hydrogen group-containing component were subjected to a prepolymerization reaction to obtain a reaction solution containing an isocyanate group-terminated prepolymer.

### (2) Addition Step

Next, a solution of a water-insoluble compound (MEK solution) was added to the above-described reaction solution. Thereafter, the reaction solution was cooled to 30°C. Diiodomethyl-p-tolylsulfone (DMTS) was used as the water-insoluble compound. In addition, the amount of the solution of the water-insoluble compound was 120 parts by mass (a mixture of 30 parts by mass of DMTS and 90 parts by mass of MEK).

### (3) Neutralization Step

Next, 7.6 parts by mass of TEA (triethylamine, neutralizer) was added to the above-described reaction solution (DMTS-added solution) to neutralize the isocyanate group-terminated prepolymer.

Next, while the above-described reaction solution (neutralized solution) was being stirred, 700.1 parts by mass of ion-exchanged water was gradually added to the reaction solution to water-disperse the isocyanate group-terminated prepolymer. Thus, an aqueous dispersion of the isocyanate group-terminated prepolymer was prepared.

### (4) Chain Extension Step

Next, according to the formulation of Table 2, in the same manner as in Production Example 1 (PUD-A), the isocyanate group-terminated prepolymer was subjected to a chain-extension reaction. Further, the solid content concentration was adjusted. Thus, a polyurethane dispersion containing the water-insoluble compound was obtained.

### Examples 2 to 13, Example 20, and Comparative Examples 1 and 2

Except that the formulation was changed to those shown in Tables 2 to 4, polyurethane dispersions were obtained in the same manner as in Example 1.

In addition, in Example 13, IPBC (iodopropynyl butyl carbamate, a water-insoluble compound) was used in place of DMTS. The amount of IPBC was 30 parts by mass (solid content) as in Example 1. In addition, in Example 20, an ethyl acetate solution of DMTS was used as a solution of a water-insoluble compound in place of a MEK solution of DMTS.

### 2. Evaluations

### (1) Acid Value

The acid value of the polyurethane dispersion was calculated from the charge ratio of the raw material components.

### (2) Oxyethylene Content Rate (% by mass)

The oxyethylene content rate (% by mass) of the polyurethane dispersion was calculated from the charge ratio of the raw material components.

### (3) Storage Stability

The polyurethane dispersion was stored in a sealed glass bottle. The condition of the polyurethane dispersion at 25°C after 2 weeks, after 1 month, and after 2 months were observed. The condition of the polyurethane dispersion at 60°C after two weeks, after one month, and after two months were also observed. Then, the storage stability was evaluated by the following criteria.

∘: A change in appearance (precipitation) and a change in viscosity (gelation) were not confirmed.
×: Precipitation of the water-insoluble compound was confirmed and/or gelation of the polyurethane dispersion were/was confirmed.

### (4) MIC Test (Bacterium)

The antibacterial properties of the polyurethane dispositions were evaluated by an MIC (minimal growth-inhibitory concentration) test.

### [Culture Medium]

The following LB (Lysogeny Broth) medium was used.

The LB medium was a medium prepared by dissolving 25g of Difco LB Broth Miller (Luria-Bertani (manufactured by Becton Dickinson and company) in 1000mL of distilled water.

### [Precultivation]

In the MIC test (bacterium), the bacterial strain of Escherichia coli (NBRC 3972, Provider National Institute of Technology and Evaluation, Escherichia coli) was used. The bacterial strain was a test bacterial strain cultured at 35°C for 24 hours by using an LB medium autoclave-sterilized under the conditions of 121°C and 20 minutes.

The polyurethane dispersion (polyurethane dispersion which contained a water-insoluble compound) of each of Examples 1 to 13, Example 20, and Comparative Examples 1 to 3 was added to an LB medium autoclave-sterilized under the conditions of 121°C and 20 minutes. Then, a 12-step doubling dilution series with the maximum concentration of the active component of 1000 ppm was produced on a multi-well plate. Thus, a polyurethane dispersion-containing medium was obtained.

Furthermore, the polyurethane dispersion (polyurethane dispersion which did not contain a water-insoluble compound) of each of Production Examples 1 to 7 was added to an LB medium so that the concentration reached 40000 ppm. Thus, a polyurethane dispersion-containing medium was obtained.

The "maximum concentration of the active component" of the MIC test method (bacterium) indicates a mass ratio (% by mass) of the water-insoluble compound in the polyurethane dispersion-containing medium. The maximum concentration of the active component is calculated from the concentration (blending amount) of the water-insoluble compound of the polyurethane dispersion and the mass of the polyurethane dispersion-containing medium.

### [Preparation of Bacterial Solution]

The test bacterial strain was suspended in an LB medium autoclave-sterilized under the conditions of 121°C and 20 minutes, and the O.D. (Optical Density) of the suspension was adjusted to 1.0 to 2.0. Thus, a bacterial solution was obtained.

### [MIC Measurement (Bacterium)]

100µL of each dilution series of the polyurethane dispersion-containing medium was inoculated with 2µL of the bacterial solution of the bacterial strain, and cultured under the conditions of 35°C and 18 to 24 hours. Thereafter, the bacterial growth was confirmed by visual observation, and the minimum dilute concentration without bacterial growth was determined as the MIC value. Specifically, when the culture medium was clear, it was determined that there was no bacterial growth.

The acceptable range of the MIC value of the MIC test (bacterium) was 0.49ppm or more. The MIC test (bacterium) was carried out three times in total, and the evaluation was carried out according to the following criteria.

### [Criteria (Examples 1 to 13, Example 20, and Comparative Examples 1 and 2)]

∘: The MIC value in terms of the antibacterial agent was 1000 ppm or less.
×: The MIC value in terms of the antibacterial agent exceeded 1000 ppm.

### [Criteria (Examples 1 to 7)]

∘: Bacterial growth was not confirmed when 40000ppm was added.
×: Bacterial growth was confirmed when 40000ppm was added.

### 3. Coating Material and Film

### Examples 14 to 19, Example 21, and Comparative Examples 3 to 9

### (1) Preparation of Coating Material

According to the formulations shown in Tables 5 to 6, the polyurethane dispersion (PUD containing a water-insoluble compound) of each of Examples and each of Comparative Examples, the polyurethane dispersion (PUD containing no water-insoluble compound) of each of Production Examples, iPA (isopropanol, a solvent), and ion-exchanged water were mixed. Thus, an aqueous coating material was obtained.

In Comparative Examples 3 to 7, the polyurethane dispersion (PUD containing a water-insoluble compound) of each of Examples and each of Comparative Examples was not blended.

### (2) Film

The above-described coating material was applied to a polyethylene terephthalate film (PET film, trade name Lumirror 100U403, manufactured by Panac Co., Ltd.) using a bar coater (No.8) and dried at 85°C for 90 seconds. Thus, a coating layer consisting of the coating material was formed on the polyethylene terephthalate film. In other words, a laminate film with a substrate and a coat layer was produced.

### 4. Evaluations of Film

### (1) Water Resistance

The laminate film was cut into a 5cm×5cm square. The laminate film was immersed in ion-exchanged water and left at 25°C for 2 days. Thereafter, the appearance of the laminate film was confirmed to evaluate the water resistance. The criteria for the evaluation are described below.

∘: A change in appearance was not confirmed.
△: Peeling of the coat layer was not confirmed. However, whitening was confirmed.
×: Peeling of the coated layer was confirmed.

### (2) Antibacterial Film Test

The antibacterial properties of the film were evaluated by the following method.

The laminate film prior to the above-described water resistance test and the laminate film after the above-described water resistance test were cut into 5cm×5cm squares, respectively. The antibacterial properties of the laminate films were tested in accordance with JIS Z 2801: 2010 (Antibacterial products - Test for antibacterial activity and efficacy).

The colony forming unit (CFU/mL, Colony forming unit) of the bacteria on the sample surface was measured after the antibacterial film test and evaluated using the following criteria.

However, the laminate films evaluated as "△" or "×" in the water resistance test were not subjected to the antibacterial film test because it was difficult to evaluate (then scored "-").

### [Criteria]

∘: Less than 100 CFU/mL
△: 100 CFU/mL or more and less than 10000 CFU/mL
×: 10000 CFU/mL or more.

### (3) Antifungal Film Test

The antifungal properties of the films were evaluated by the following method.

The laminate film prior to the above-described water resistance test and the laminate film after the above-described water resistance test were cut into 5cm×5cm squares, respectively. The antifungal properties of the laminate films were tested in accordance with JIS Z 2911:2018 (Methods of test for fungus resistance, "Annex A Test of Plastic Products").

The growth of hyphae on the sample surface after the antifungal film test was evaluated using the following criteria.

However, the laminate films evaluated as "△" or "×" in the water resistance test were not subjected to the antifungal film test because it was difficult to evaluate (then scored "-").

### [Criteria]

∘: The area of the portion of the growth was less than 25% of the total area of the sample.
△: The area of the portion of the growth was 25% or more and less than 50% of the total area of the sample.
×: The area of the portion of the growth was 50% or more of the total area of the sample.

### [Table 1]

**Table 1**

| No. | | | | Prod. Ex. 1 | Prod. Ex. 2 | Prod. Ex. 3 | Prod. Ex. 4 | Prod. Ex. 5 | Prod. Ex. 6 | Prod. Ex. 7 | Prod. Ex. 8 |
|---|---|---|---|---|---|---|---|---|---|---|---|
| PUD | | | | PUD-A | PUD-B | PUD-C | PUD-D | PUD-E | PUD-F | PUD-G | PUD-H |
| Formulations (parts by mass) | Polyurethane resin | Polyisocyanate component | IPDI | 102.9 | 98.4 | 108.2 | 98.4 | 107.1 | 114.4 | 96.2 | 103.4 |
| | | Active hydrogen group-containing component | UH-200 | 154.2 | 164.7 | 141.5 | 119.1 | 114.7 | 127.0 | 169.6 | 154.9 |
| | | | NPG | 16.1 | 17.1 | 14.7 | 12.4 | 11.9 | 13.2 | 17.7 | 16.1 |
| | | | TMP | - | - | - | 8.0 | 5.1 | - | - | - |
| | | | DMPA | 10.3 | 6.5 | 15.1 | | 10.0 | 20.4 | 4.6 | 10.4 |
| | | | MeOPEG1000 | - | - | - | 53.6 | 34.4 | - | - | - |
| | | Neutralizer | TEA | 7.6 | 4.8 | 11.1 | - | 7.4 | 15.1 | 3.4 | 7.7 |
| | | Chain extension component | EDA | 8.8 | 8.4 | 9.3 | 8.4 | 9.2 | 9.8 | 8.2 | - |
| | | | HYD | - | - | - | - | - | - | - | 7.4 |
| | Water-insoluble compound | | DMTS | - | - | - | - | - | - | - | - |
| | | | IPBC | - | - | - | - | - | - | - | - |
| | Ion-exchanged water | | | 700.1 | 700.1 | 700.1 | 700.1 | 700.1 | 700.1 | 700.3 | 700.1 |
| Solid content concentration | | | % by mass | 30.0 | 30.0 | 30.0 | 30.0 | 30.0 | 30.0 | 30.0 | 30.0 |
| Water-insoluble compound/PUD 100 parts by mass | | | Parts by mass | 0.0 | 0.0 | 0.0 | 0.0 | 0.0 | 0.0 | 0.0 | 0.0 |
| Water-insoluble compound/polyurethane resin 100 parts by mass | | | Parts by mass | 0.0 | 0.0 | 0.0 | 0.0 | 0.0 | 0.0 | 0.0 | 0.0 |
| Hydrophilic group | Acid value | | mgKOH/g | 14.4 | 9.0 | 21.0 | | 13.9 | 28.5 | 6.4 | 14.4 |
| | Oxyethylene content rate | | % by mass | - | - | - | 17.9 | 11.5 | - | - | |
| Evaluations | Storage stability | | At 25°C for 2 weeks | ○ | ○ | ○ | ○ | ○ | ○ | ○ | ○ |
| | | | At 25°C for 1 month | ○ | ○ | ○ | ○ | ○ | ○ | ○ | ○ |
| | | | At 25°C for 2 months | ○ | ○ | ○ | ○ | ○ | ○ | ○ | ○ |
| | | | At 60°C for 2 weeks | ○ | ○ | ○ | ○ | ○ | ○ | ○ | ○ |
| | | | At 60°C for 1 month | ○ | ○ | ○ | ○ | ○ | ○ | ○ | ○ |
| | | | At 60°C for 2 months | ○ | ○ | ○ | ○ | ○ | ○ | ○ | ○ |
| | Antibacterial property test | | MIC test | × | × | × | × | × | × | × | × |

### [Table 2]

**Table2**

| No. | | | | Ex. 1 | Ex. 2 | Ex. 3 | Ex. 4 | Ex. 5 | Ex. 6 |
|---|---|---|---|---|---|---|---|---|---|
| PUD | | | | PUD-A | PUD-A | PUD-B | PUD-C | PUD-D | PUD-E |
| Formulations (parts by mass) | Polyurethane resin | Polyisocyanate component | IPDI | 102.9 | 102.9 | 98.4 | 108.2 | 98.4 | 107.1 |
| | | Active hydrogen group-containing component | UH-200 | 154.2 | 154.2 | 164.7 | 141.5 | 119.1 | 114.7 |
| | | | NPG | 16.1 | 16.1 | 17.1 | 14.7 | 12.4 | 11.9 |
| | | | TMP | - | - | - | - | 8.0 | 5.1 |
| | | | DMPA | 10.3 | 10.3 | 6.5 | 15.1 | - | 10.0 |
| | | | MeOPEG1000 | - | - | - | - | 53.6 | 34.4 |
| | | Neutralizer | TEA | 7.6 | 7.6 | 4.8 | 11.1 | - | 7.4 |
| | | Chain extension component | EDA | 8.8 | 8.8 | 8.4 | 9.3 | 8.4 | 9.2 |
| | | | HYD | - | - | - | - | - | - |
| | Water-insoluble compound | | DMTS | 9.0 | 30.0 | 30.0 | 30.0 | 30.0 | 30.0 |
| | | | IPBC | - | - | - | - | - | - |
| | Ion-exchanged water | | | 691.1 | 670.1 | 670.1 | 670.1 | 670.1 | 670.1 |
| Solid content concentration | | | % by mass | 30.9 | 33.0 | 33.0 | 33.0 | 33.0 | 33.0 |
| Water-insoluble compound/PUD 100 parts by mass | | | Parts by mass | 0.9 | 3.0 | 3.0 | 3.0 | 3.0 | 3.0 |
| Water-insoluble compound/polyurethane resin 100 parts by mass | | | Parts by mass | 3.0 | 10.0 | 10.0 | 10.0 | 10.0 | 10.0 |
| Hydrophilic group | Acid value | | mgKOH/g | 14.4 | 14.4 | 9.0 | 21.0 | - | 13.9 |
| | Oxyethylene content rate | | % by mass | - | - | - | - | 17.9 | 11.5 |
| Evaluations | Storage stability | | At 25°C for 2 weeks | ○ | ○ | ○ | ○ | ○ | ○ |
| | | | At 25°C for 1 month | ○ | ○ | ○ | ○ | ○ | ○ |
| | | | At 25°C for 2 months | ○ | ○ | ○ | ○ | ○ | ○ |
| | | | At 60°C for 2 weeks | ○ | ○ | ○ | ○ | ○ | ○ |
| | | | At 60°C for 1 month | ○ | ○ | ○ | ○ | ○ | ○ |
| | | | At 60°C for 2 months | ○ | ○ | × | × | ○ | ○ |
| | Antibacterial property test | | MIC test | ○ | ○ | ○ | ○ | ○ | ○ |

### [Table 3]

**Table3**

| No. | | | | Ex. 7 | Ex. 8 | Ex. 9 | Ex. 10 | Ex. 11 | Ex. 12 |
|---|---|---|---|---|---|---|---|---|---|
| PUD | | | | PUD-A | PUD-A | PUD-A | PUD-A | PUD-A | PUD-A |
| Formulations (parts by mass) | Polyurethane resin | Polyisocyanate component | IPDI | 102.9 | 102.9 | 102.9 | 102.9 | 102.9 | 102.9 |
| | | Active hydrogen group-containing component | UH-200 | 154.2 | 154.2 | 154.2 | 154.2 | 154.2 | 154.2 |
| | | | NPG | 16.1 | 16.1 | 16.1 | 16.1 | 16.1 | 16.1 |
| | | | TMP | - | - | - | - | - | - |
| | | | DMPA | 10.3 | 10.3 | 10.3 | 10.3 | 10.3 | 10.3 |
| | | | MeOPEG1000 | - | - | - | - | - | - |
| | | Neutralizer | TEA | 7.6 | 7.6 | 7.6 | 7.6 | 7.6 | 7.6 |
| | | Chain extension component | EDA | 8.8 | 8.8 | 8.8 | 8.8 | 8.8 | 8.8 |
| | | | HYD | - | - | - | - | - | - |
| | Water-insoluble compound | | DMTS | 40.0 | 40.0 | 50.0 | 50.0 | 60.0 | 60.0 |
| | | | IPBC | - | - | - | - | - | - |
| | Ion-exchanged water | | | 660.1 | 993.0 | 650.1 | 1316.2 | 640.1 | 1639.8 |
| Solid content concentration | | | % by mass | 34.0 | 25.5 | 35.0 | 21.0 | 36.0 | 18.0 |
| Water-insoluble compound/PUD 100 parts by mass | | | Parts by mass | 4.0 | 3.0 | 5.0 | 3.0 | 6.0 | 3.0 |
| Water-insoluble compound/polyurethane resin 100 parts by mass | | | Parts by mass | 13.3 | 13.3 | 16.7 | 16.7 | 20.0 | 20.0 |
| Hydrophilic group | Acid value | | mgKOH/g | 14.4 | 14.4 | 14.4 | 14.4 | 14.4 | 14.4 |
| | Oxyethylene content rate | | % by mass | - | - | - | - | - | - |
| Evaluations | Storage stability | | At 25°C for 2 weeks | ○ | ○ | ○ | ○ | O | ○ |
| | | | At 25°C for 1 month | ○ | ○ | ○ | ○ | × | ○ |
| | | | At 25°C for 2 months | ○ | ○ | × | ○ | × | ○ |
| | | | At 60°C for 2 weeks | ○ | ○ | ○ | ○ | ○ | ○ |
| | | | At 60°C for 1 month | ○ | ○ | × | ○ | × | ○ |
| | | | At 60°C for 2 months | × | ○ | × | ○ | × | × |
| | Antibacterial property test | | MIC test | ○ | ○ | ○ | ○ | ○ | ○ |

### [Table 4]

**Table4**

| No. | | | | Ex. 13 | Ex. 20 | Comp. Ex. 1 | Comp. Ex. 2 |
|---|---|---|---|---|---|---|---|
| PUD | | | | PUD-A | PUD-H | PUD-F | PUD-G |
| Formulations (parts by mass) | Polyurethane resin | Polyisocyanate component | IPDI | 102.9 | 103.4 | 114.4 | 96.2 |
| | | Active hydrogen group-containing component | UH-200 | 154.2 | 154.9 | 127.0 | 169.6 |
| | | | NPG | 16.1 | 16.1 | 13.2 | 17.7 |
| | | | TMP | - | - | - | - |
| | | | DMPA | 10.3 | 10.4 | 20.4 | 4.6 |
| | | | MeOPEG1000 | - | - | - | - |
| | | Neutralizer | TEA | 7.6 | 7.7 | 15.1 | 3.4 |
| | | Chain extension component | EDA | 8.8 | - | 9.8 | 8.2 |
| | | | HYD | - | 7.4 | - | - |
| | Water-insoluble compound | | DMTS | - | 29.99 | 30.0 | 30.0 |
| | | | IPBC | 30.0 | - | - | - |
| | Ion-exchanged water | | | 670.1 | 670.1 | 670.1 | 670.3 |
| Solid content concentration | | | % by mass | 33.0 | 33.0 | 33.0 | 33.0 |
| Water-insoluble compound/PUD 100 parts by mass | | | Parts by mass | 3.0 | 3.0 | 3.0 | 3.0 |
| Water-insoluble compound/polyurethane resin 100 parts by mass | | | Parts by mass | 10.0 | 10.0 | 10.0 | 10.0 |
| Hydrophilic group | Acid value | | mgKOH/g | 14.4 | 14.4 | 28.5 | 6.4 |
| | Oxyethylene content rate | | % by mass | - | | - | - |
| Evaluations | Storage stability | | At 25°C for 2 weeks | ○ | ○ | ○ | ○ |
| | | | At 25°C for 1 month | ○ | ○ | × | × |
| | | | At 25°C for 2 months | ○ | ○ | × | × |
| | | | At 60°C for 2 weeks | ○ | ○ | × | × |
| | | | At 60°C for 1 month | ○ | ○ | × | × |
| | | | At 60°C for 2 months | ○ | ○ | × | × |
| | Antibacterial property test | | MIC test | ○ | ○ | ○ | ○ |

### [Table 5]

**Table5**

| No. | | | Ex. 14 | Ex. 15 | Ex. 16 | Ex. 17 | Ex. 18 | Ex. 19 | Ex. 21 |
|---|---|---|---|---|---|---|---|---|---|
| Types of PUD | | | PUD-A | PUD-B | PUD-C | PUD-D | PUD-E | PUD-A | PUD-H |
| PUD containing water-insoluble compound | | No. | Ex. 2 | Ex. 3 | Ex. 4 | Ex. 5 | Ex. 6 | Ex. 13 | Ex. 20 |
| | | Types | DMTS | DMTS | DMTS | DMTS | DMTS | IPBC | DMTS |
| | | Parts by mass | 10.0 | 10.0 | 10.0 | 10.0 | 10.0 | 10.0 | 10.0 |
| PUD containing no water-insoluble compound | | No. | Prod. Ex. 1 | Prod. Ex. 2 | Prod. Ex. 3 | Prod. Ex. 4 | Prod. Ex. 5 | Prod. Ex. 1 | Prod. Ex. 8 |
| | | Parts by mass | 10.0 | 10.0 | 10.0 | 10.0 | 10.0 | 10.0 | 10.0 |
| iPA | | Parts by mass | 3.0 | 3.0 | 3.0 | 3.0 | 3.0 | 3.0 | 3.0 |
| Ion-exchanged water | | Parts by mass | 7.0 | 7.0 | 7.0 | 7.0 | 7.0 | 7.0 | 7.0 |
| Hydrophilic group | Acid value | mgKOH/g | 14.4 | 9.0 | 21.0 | - | 13.9 | 14.4 | 14.4 |
| | Oxyethylene content | % by mass | - | - | - | 17.9 | 11.5 | - | - |
| Water-insoluble compound/polyurethane resin 100Parts by mass | | Parts by mass | 5.0 | 5.0 | 5.0 | 5.0 | 5.0 | 5.0 | 5.0 |
| Evaluations | Water resistance | | ○ | ○ | ○ | Δ | Δ | ○ | ○ |
| | Antibacterial film test | Before water resistance test | ○ | ○ | Δ | ○ | ○ | Δ | ○ |
| | | After water resistance test | ○ | ○ | Δ | - | - | Δ | ○ |
| | Antifungal film test | Before water resistance test | ○ | Δ | ○ | Δ | Δ | Δ | ○ |
| | | After water resistance test | ○ | Δ | ○ | - | - | Δ | ○ |

### [Table 6]

**Table6**

| No. | | | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|
| Types of PUD | | | PUD-A | PUD-B | PUD-C | PUD-D | PUD-E | PUD-F | PUD-G |
| PUD containing water-insoluble compound | | No. | - | - | - | - | - | Comp. Ex. 1 | Comp. Ex. 2 |
| | | Types | - | - | - | - | - | DMTS | DMTS |
| | | Parts by mass | - | - | - | - | - | 10.0 | 10.0 |
| PUD containing no water-insoluble compound | | No. | Prod. Ex. 1 | Prod. Ex. 2 | Prod. Ex. 3 | Prod. Ex. 4 | Prod. Ex. 5 | Prod. Ex. 6 | Prod. Ex. 7 |
| | | Parts by mass | 20.0 | 20.0 | 20.0 | 20.0 | 20.0 | 10.0 | 10.0 |
| iPA | | Parts by mass | 3.0 | 3.0 | 3.0 | 3.0 | 3.0 | 3.0 | 3.0 |
| Ion-exchanged water | | Parts by mass | 7.0 | 7.0 | 7.0 | 7.0 | 7.0 | 7.0 | 7.0 |
| Hydrophilic group | Acid value | mgKOH/g | 14.4 | 9.0 | 21.0 | - | 13.9 | 28.5 | 6.4 |
| | Oxyethylene content | % by mass | - | - | - | 17.9 | 11.5 | - | - |
| Water-insoluble compound/polyurethane resin 100Parts by mass | | Parts by mass | 0.0 | 0.0 | 0.0 | 0.0 | 0.0 | 5.0 | 5.0 |
| Evaluations | Water resistance | | ○ | ○ | ○ | Δ | Δ | ○ | ○ |
| | Antibacterial film test | Before water resistance test | × | × | × | × | × | × | ○ |
| | | After water resistance test | × | × | × | - | - | × | ○ |
| | Antifungal film test | Before water resistance test | × | × | × | × | × | ○ | Δ |
| | | After water resistance test | × | × | × | - | - | ○ | Δ |

The details of abbreviations in Tables are described below.
IPDI: isophorone diisocyanate
UH-200: trade name ETERNACOLL UH-200, polycarbonate diol, number-average molecular weight 2000, UBE Corporation
NPG: neopentyl glycol
TMP: trimethyrol propane
DMPA: dimethylol propionic acid
MeOPEG1000: methoxypolyethylene glycol, oxyethylene group-containing active hydrogen compound, number-average molecular weight 1000
TEA: triethylamine
EDA: ethylenediamine
HYD: hydrazine·monohydrate
DMTS: diiodomethyl-p-tolylsulfone
IPBC: iodopropinyl butyl carbamate

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

### Industrial Applicability

The polyurethane dispersion and coating material of the present invention are suitably used in the field of antibacterial agents, the field of antiviral agents, the field of antifungal agents, and the field of antialgal agents.

## Claims

1. A polyurethane dispersion comprising:
water,
a polyurethane resin dispersed in the water, and
a water-insoluble compound encapsulated in the polyurethane resin,
wherein the water-insoluble compound has an activity against a minute hazardous substance; and
wherein the polyurethane resin contains an anionic group, and the polyurethane resin has an acid value of 8 to 25 mgKOH/g, and/or
the polyurethane resin contains a polyoxyethylene group, and the polyurethane resin has an oxyethylene content rate of 8 to 20% by mass.

2. The polyurethane dispersion according to claim 1, wherein the polyurethane resin contains an anionic group, and the polyurethane resin has an acid value of 10 to 20 mgKOH/g.

3. The polyurethane dispersion according to claim 1,
wherein a content of the water-insoluble compound is 0.5 to 18 parts by mass with respect to 100 parts by mass of the polyurethane resin; and
wherein a solid content concentration of the polyurethane dispersion is more than 20% by mass.

4. The polyurethane dispersion according to claim 1,
wherein a content of the water-insoluble compound is more than 18 parts by mass with respect to 100 parts by mass of the polyurethane resin; and
wherein a solid content concentration of the polyurethane dispersion is 20% by mass or less.

5. The polyurethane dispersion according to claim 1, wherein an amount of the water-insoluble compound dissolved in water is 1 g or less/100 g of water.

6. The polyurethane dispersion according to claim 1, wherein the water-insoluble compound is diiodomethyl-p-tolylsulfone.

7. A coating material comprising: a polyurethane dispersion according to any one of claims 1 to 6.
